# EUROPEAN PATENT APPLICATION

(11) **EP 4 592 638 A1**
(43) Date of publication of application: **30.07.2025**
(21) Application number: 22959504.6
(22) Date of filing: 20.09.2022
(51) Int. Cl.: G01C 3/06

(54) **IMAGE PROCESSING DEVICE**

(71) Applicant: Hitachi Astemo, Ltd., Ibaraki 312-8503 (JP)
(72) Inventor: MATSUO, Shigeru, Tokyo 100-8280 (JP); ENDO, Takeshi, Tokyo 100-8280 (JP); TAKEMURA, Masayuki, Hitachinaka-shi, Ibaraki 312-8503 (JP); TAKADA, Masashi, Hitachinaka-shi, Ibaraki 312-8503 (JP)
(74) Representative: Strehl & Partner mbB
(86) International application number: PCT/JP2022/035027
(87) International publication number: WO 2024/062540

(57) **Abstract**

An image processing device capable of calculating an accurate disparity is provided. An image processing device 20 includes: a disparity calculation unit 30 that calculates a disparity between images 111 and 112 taken by a plurality of cameras 11 and 12; a labeling unit 40 that classifies a subject appearing in the images 111 and 112 and that assigns a label to each of pixels of the subject classified, the label corresponding to a type of the subject classified; a confidence calculation unit 50 that calculates confidence in the disparity for each label assigned; and a disparity correction unit 60 that corrects the disparity according to the confidence calculated.

## Description

### Technical Field

The present invention relates to an image processing device.

### Background Art

To improve the traveling safety of a vehicle, a system that detects an object around the vehicle by a sensor or the like incorporated in the vehicle has been studied. When a possibility of collision with an object arises, this type of system issues an alarm to notify the driver of the risk of collision or activates an automatic emergency brake.

A millimeter wave radar, a laser radar, a camera, and the like are used as sensors monitoring the surroundings of the vehicle. As different types of cameras, a monocular camera and a stereo camera composed of a plurality of cameras are known. The stereo camera can measure a distance to an object by using a disparity of an overlapping area of images taken by two cameras arranged at a given interval. The stereo camera, therefore, can accurately grasp the risk of collision with the object.

Since the stereo camera calculates a disparity between images taken by a plurality of cameras and converts the calculated disparity into a distance, the stereo camera capable of calculating an accurate disparity is desirable. For example, PTL 1 discloses a technique for calculating an accurate disparity.

PTL 1 discloses a stereo image processing device including: an imaging means that takes an image of an object; a stereo processing means that carries out a stereo matching process of determining a correlation between respective small areas of a pair of images taken by the imaging means to specify areas corresponding to each other and that acquires an evaluation function as a stereo matching process result, distance information on a distance to the object, the distance information being obtained based on the evaluation function, and confidence information indicating confidence in the distance information; and a disparity correction means that sets a re-research range around a target small area, according to the confidence, that corrects an evaluation function determined for the target small area, based on the evaluation function determined for a small area within the re-research range, to obtain a corrected evaluation function, and that corrects the distance information, based on the obtained corrected evaluation function.

### Citation List

### Patent Literature

PTL 1: JP 2006-90896 A

### Summary of Invention

### Technical Problem

The device disclosed in PTL 1 corrects a disparity by correcting an evaluation function determined in matching blocks units set in stereo matching. According to the device disclosed in PTL 1, therefore, depending on a status of images taken, even a corrected disparity may include a large error. Thus, there is room for further improvement of the device.

The present invention has been conceived in view of the above problem, and an object of the present invention is to provide an image processing device capable of calculating an accurate disparity.

### Solution to Problem

In order to solve the above problem, an image processing device according to the present invention includes: a disparity calculation unit that calculates a disparity between images taken by a plurality of cameras; a labeling unit that classifies a subject appearing in the images and that assigns a label to each of pixels of the subject classified, the label corresponding to a type of the subject classified; a confidence calculation unit that calculates confidence in the disparity for each label assigned; and a disparity correction unit that corrects the disparity according to the confidence calculated.

### Advantageous Effects of Invention

According to the present invention, an image processing device capable of calculating an accurate disparity can be provided.

Problems, configurations, and effects that are not described above will be made clear by the following description of embodiments.

### Brief Description of Drawings

[FIG. 1] FIG. 1 depicts a configuration of a stereo camera apparatus including an image processing device according to an embodiment.
[FIG. 2] FIG. 2 depicts a disparity image.
[FIG. 3] FIG. 3 depicts a labeled image.
[FIG. 4] FIG. 4 shows diagrams for explaining an occlusion part.
[FIG. 5] FIG. 5 depicts a confidence table.
[FIG. 6] FIG. 6 depicts a confidence image.
[FIG. 7] FIG. 7 is a flowchart showing operations of the image processing device.
[FIG. 8] FIG. 8 is a flowchart showing processes carried out by a confidence calculation unit.
[FIG. 9] FIG. 9 depicts an example of a configuration of data written to one pixel of a confidence image.
[FIG. 10] FIG. 10 is a flowchart showing processes carried out by an interpolation unit.
[FIG. 11] FIG. 11 is a diagram for explaining step S34 shown in FIG. 10.
[FIG. 12] FIG. 12 is a flowchart showing processes carried out by a recalculation unit.

### Description of Embodiments

Embodiments of the present invention will hereinafter be described with reference to the drawings. In each embodiment, constituent elements denoted by the same reference signs have the same functions unless otherwise specified, and therefore redundant description of such constituent elements is omitted.

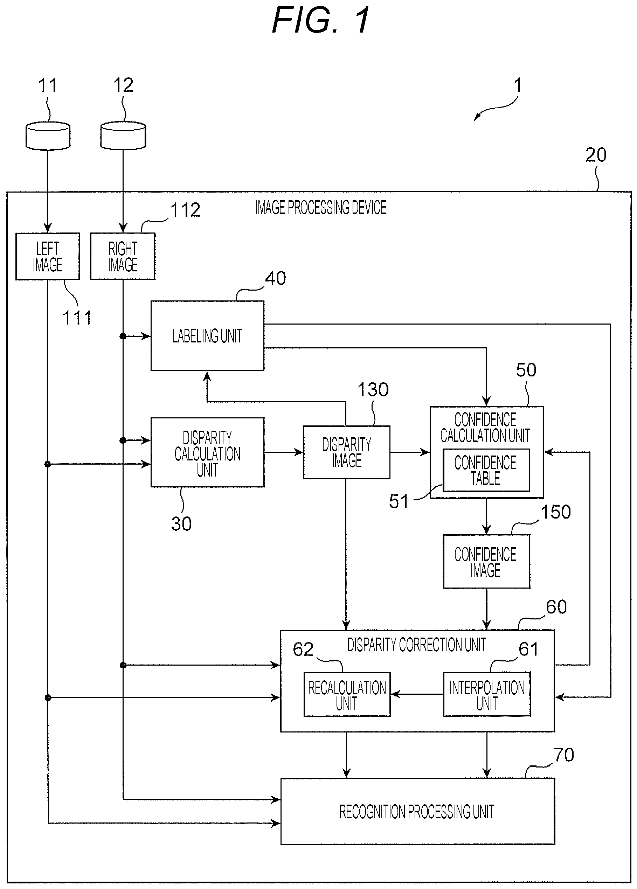

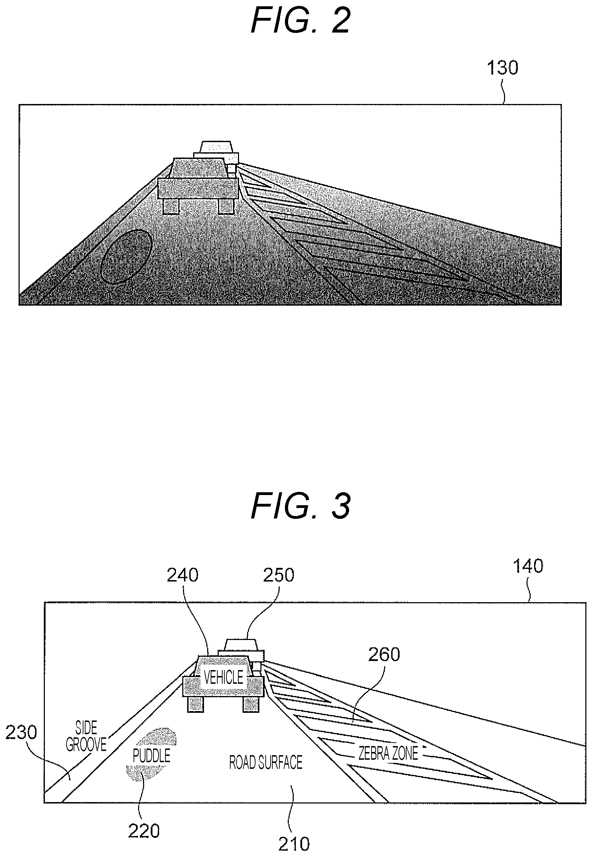

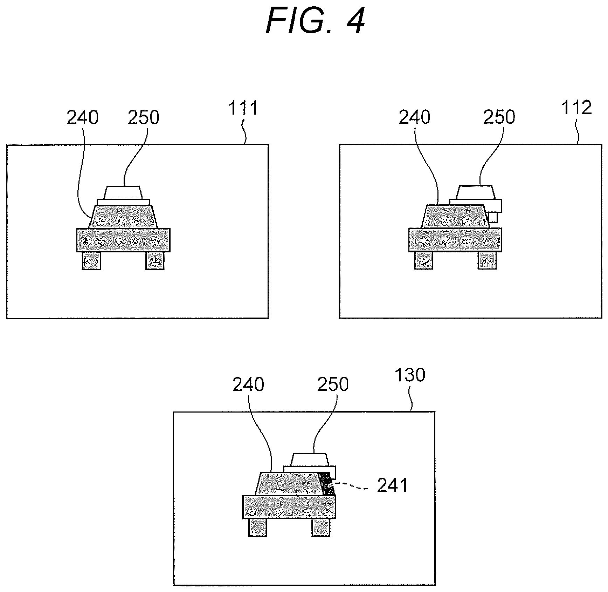

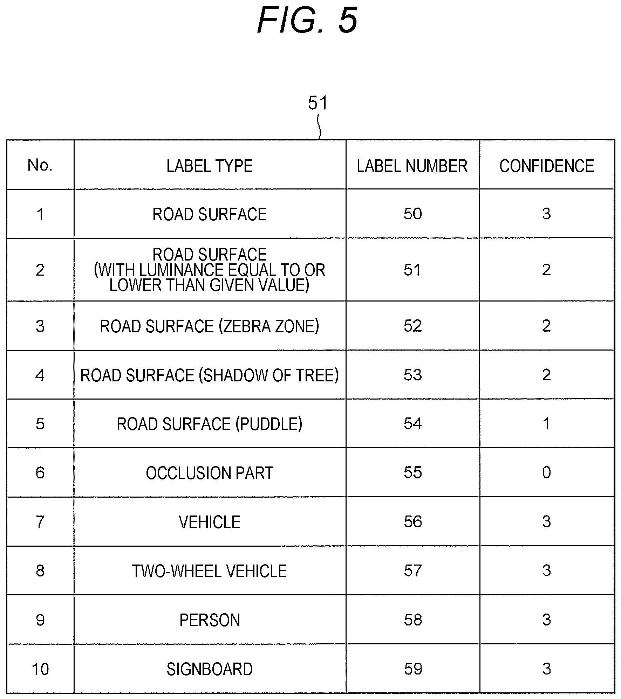

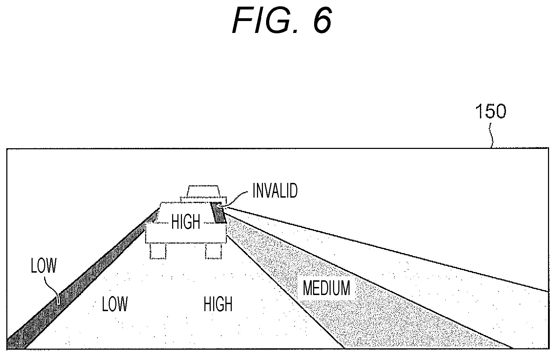

FIG. 1 depicts a configuration of a stereo camera apparatus 1 including an image processing device 20 according to an embodiment. FIG. 2 depicts a disparity image 130. FIG. 3 depicts a labeled image 140. FIG. 4 shows diagrams for explaining an occlusion part 241. FIG. 5 depicts a confidence table 51. FIG. 6 depicts a confidence image 150.

The stereo camera apparatus 1 is a type of a sensor that is incorporated in a vehicle to monitor the surroundings of the vehicle. The stereo camera apparatus 1 detects an object around the vehicle and measures a distance to the object, using a disparity in an overlapping area of images 111 and 112 taken by a plurality of cameras 11 and 12 horizontally arranged at a given interval.

The stereo camera apparatus 1 shown in FIG. 1 includes the left camera 11 and the right camera 12, and the image processing device 20 that carries out image processing to process the left image 111 taken by the left camera 11 and the right image 112 taken by the right camera 12.

The image processing device 20 is composed of, for example, a computer including a processor, such as a CPU, and a storage device, such as a ROM and a RAM. The image processing device 20 implements its various functions as a result of the CPU's executing programs stored in the ROM.

The image processing device 20 includes a disparity calculation unit 30, a labeling unit 40, a confidence calculation unit 50, a disparity correction unit 60, and a recognition processing unit 70.

The disparity calculation unit 30 calculates, for each pixel, a disparity between the left image 111 and the right image 112 taken respectively by the left camera 11 and the right camera 12. The disparity calculation unit 30 of this embodiment has a neural network model. The left image 111 and the right image 112 are set in an input layer of the neural network model. A disparity between the left image 111 and the right image 112 is set in an output layer of the neural network model. A weight, a bias, and an activation function of each neuron are set in an intermediate layer of the neural network model. The neural network model is constructed by determining a weight and a bias of each neuron through a machine learning algorithm, such as backpropagation, and is incorporated in the disparity calculation unit 30 in advance. The machine learning algorithm may be a supervised learning algorithm. The disparity calculation unit 30 may have a model constructed by machine learning that is different from the neural network model. The model the disparity calculation unit 30 has may be, for example, an optical flow model.

The disparity calculation unit 30 generates a disparity image 130 in which a calculated disparity is stored in each pixel. For example, as shown in FIG. 2, the disparity image 130 is generated as an image in which a disparity corresponding to each pixel of the right image 112 is stored in each pixel of the right image 112. The disparity image 130 shown in FIG. 2 indicates that the thicker the color of an area is, the larger the disparity in the area is, that is, the closer the area is to the camera.

The labeling unit 40 classifies a subject appearing in the right image 112, and assigns a label to each of pixels of the classified subject, the label corresponding to a type of the classified subject. The labeling unit 40 can classify a subject and assign a label to its pixels, using the neural network model. The labeling unit 40 of this embodiment classifies a subject and gives a label to its pixels by panoptic segmentation. An outline of a panoptic segmentation process is introduced in a paper "Panoptic Feature Pyramid Networks" presented by Kirillov et al. at IEEE/CVF Conference on CVPR in 2019. The labeling unit 40 can apply the panoptic segmentation process outlined in this paper.

For example, as shown in FIG. 3, the labeling unit 40 classifies subjects appearing in the right image 112 on a pixel-by-pixel basis according to learned label information, thus classifying the subjects into a road surface 210, a puddle 220, a side groove 230, a vehicle 240, a vehicle 250, and a zebra zone 260. The labeling unit 40 then writes the label number of a label assigned to each subject, to each of pixels of the subject. In this manner, the labeling unit 40 generates a labeled image 140 in which each pixel having a label number is stored therein.

There is a case where in an area photographed by the right camera 12, a part constituting a blind spot to the left camera 11 and therefore not photographed by the left camera 11 is present. Such a part, which is referred to as an occlusion part 241, makes accurate disparity calculation impossible. It is therefore necessary to clearly indicate that a disparity is invalid at the occlusion part 241. To specify the occlusion part 241, the labeling unit 40 carries out the following processes. For example, as shown in FIG. 4, a case is assumed where a state of overlapping of the vehicle 240 and the vehicle 250 in the right image 112 is different from the same in the left image 111 and an image of the occlusion part 241 is not included in the left image 111. In this case, the labeling unit 40 compares a disparity of the vehicle 240 with a disparity of the vehicle 250, and specifies an area present on the right side of vehicle 240, which is a subject with a large disparity, as the occlusion part 241. The lateral width of the occlusion part 241 is equivalent to the number of pixels of a difference between the disparity of the vehicle 240 and the disparity of the vehicle 250.

The labeling unit 40 can verify the consistency between a type of a classified subject and a label assigned to the subject, based on a disparity calculated by the disparity calculation unit 30. For example, when a signboard carrying a photograph of a person is a subject, respective disparities of a group of pixels making up the subject are values remaining substantially constant or changing linearly in the group of pixels, and therefore the subject is recognized as a flat surface. When an actual person is a subject, on the other hand, respective disparities of a group of pixels making up the subject are values changing nonlinearly in the group of pixels, and therefore the subject is recognized as a solid. Through these processes, the labeling unit 40 can verify the consistency between a type of a classified subject and a label assigned to the subject by using not only the right image 112 but also the disparity image 130.

The confidence calculation unit 50 calculates confidence in a disparity for each label given by the labeling unit 40. Confidence is an index numerically expressing the size of an error included in a disparity value. As the error included in the disparity value gets smaller, the confidence gets higher. In this embodiment, the error included in the disparity value being 20% or more gives the confidence "low", the error being 10% or more and less than 20% gives the confidence "medium", and the error being less than 10% gives the confidence "high".

Depending on a status of the surroundings of a vehicle, where the images 111 and 112 images are taken, an error may develop in a disparity to render accurate disparity calculation impossible. Carrying out a recognition process using an incorrect disparity not corrected may create a situation where an object is wrongly detected or cannot be detected at all. To prevent this, the confidence calculation unit 50 calculates confidence in order to clarify a subject whose disparity is assumed to be inaccurate.

The confidence calculation unit 50 calculates confidence in a disparity, using a confidence table 51 created in advance. As shown in FIG. 5, the confidence table 51 is a table showing a correspondence relationship between labels and confidence. In the confidence table 51 shown in FIG. 5, a confidence item being "0 " indicates confidence "invalid", a confidence item being "1" indicates confidence "low", a confidence item being "2" indicates confidence "medium", and a confidence item being "3" indicates confidence "high".

Referring to the confidence table 51, the confidence calculation unit 50 specifies confidence corresponding to a label given by the labeling unit 40. The confidence calculation unit 50 then writes the specified confidence to each of pixels of a subject to which the label is given. In this manner, the confidence calculation unit 50 generates the confidence image 150 in which each pixel having a label number and confidence is stored therein, as shown in FIG. 6.

The disparity correction unit 60 corrects a disparity according to confidence calculated by the confidence calculation unit 50. The disparity correction unit 60 includes an interpolation unit 61 and a recalculation unit 62.

The interpolation unit 61 interpolates a disparity with confidence lower than a reference confidence, based on a disparity calculated for the images 111 and 112 taken in the past. The interpolation unit 61 can correct the disparity image 130 by interpolating the disparity with confidence lower than the reference confidence. Based on the disparity calculated for the images 111 and 112 taken in the past, the interpolation unit 61 of this embodiment determines whether or not to interpolate a disparity with confidence "low" or "invalid", and when determining interpolation of the disparity, interpolates the disparity with confidence "low" or "invalid", using a disparity with confidence "high". For example, a case is assumed where in a given area, confidence is calculated at "low " or" invalid" for the images 111 and 112 taken at the present but is calculated at "high" for the images 111 and 112 taken in the past. In this case, the interpolation unit 61 of this embodiment determines that it interpolates a disparity with confidence "low" or "invalid" in the area, and interpolates the disparity with confidence "low" or "invalid" in the area, using a disparity with confidence "high" that is adjacent to the area.

The recalculation unit 62 recalculates a disparity with confidence lower than the reference confidence, by a method different from a method adopted by disparity calculation unit 30. The recalculation unit 62 can correct the disparity image 130 by replacing the disparity with confidence lower than the reference confidence with a recalculated disparity. The recalculation unit 62 of this embodiment recalculates a disparity with confidence "medium" or "low" by, for example, stereo matching. The recalculation unit 62 of this embodiment may recalculate a disparity interpolated by the interpolation unit 61. When the disparity calculation unit 30 calculates a disparity by stereo matching, the recalculation unit 62 may recalculate a disparity using the neural network model.

The recognition processing unit 70 detects an object around the vehicle, based on a disparity corrected by the disparity correction unit 60, confidence calculated by the confidence calculation unit 50, and the images 111 and 112. Specifically, the recognition processing unit 70 detects an object around the vehicle, using the corrected disparity image 130, the confidence image 150, the left image 111, and the right image 112.

For example, a road surface area with confidence "high" has an accurate disparity, which allows detection of a small subject on the road surface. A road surface area with confidence "low", on the other hand, makes difficult distinguishing between a small subject on the road surface and an error included in a disparity. Thus, to avoid wrong detection in an area with confidence "low", the recognition processing unit 70 changes the size of a subject to be recognized as a detection target or a distance to the subject, according to confidence. For example, in an area with confidence "low ", the recognition processing unit 70 recognizes a subject with a height larger than an error included in a disparity of the road surface, the subject being among subjects on the road surface, as a detection target. The large height of the subject results in a case where an object photographed as the subject is close to the cameras 11 and 12 or a case where the object has a height larger than a given value. Therefore, in a road surface area with confidence "low", the recognition processing unit 70 recognizes a subject with a height larger than an error included in a disparity of the road surface, as a detection target. In a road surface area with confidence "high", the recognition processing unit 70 recognizes a subject with a height smaller than the height of the road surface area with confidence "high", as a detection target as well. In this manner, the recognition processing unit 70 changes the size of a subject to be recognized as a detection target or a distance to the subject, according to confidence. As an object detection method, the recognition processing unit 70 is allowed to adopt a known method of detecting an object.

To the recognition processing unit 70, the disparity image 130 and the confidence image 150 association with each other pixel by pixel are inputted. In other words, to the recognition processing unit 70, disparities, confidence, and label information association with each other pixel by pixel are inputted. As a result, for example, the recognition processing unit 70 is able to reassign a label ex post facto to a pixel with confidence lower than the reference confidence or recalculate confidence ex post facto. In other words, the recognition processing unit 70 is able to review data (confidence or label) acquired in a previous stage to object detection, thus being able to improve the accuracy of object detection.

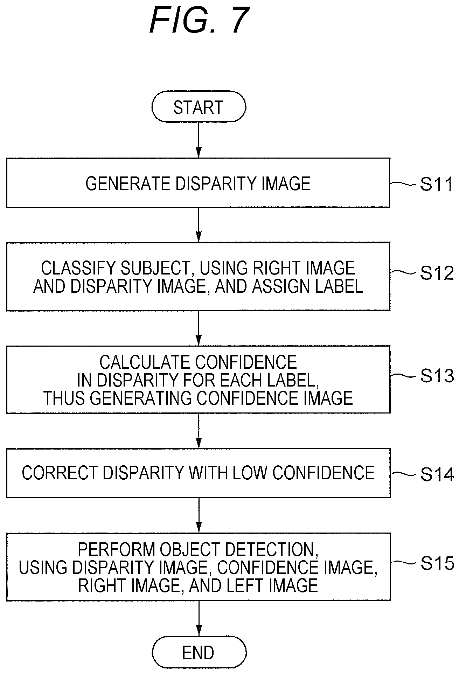

FIG. 7 is a flowchart showing operations of the image processing device 20.

At step S11, the disparity calculation unit 30 of the image processing device 20 generates the disparity image 130 from the left image 111 and the right image 112.

At step S12, the labeling unit 40 of the image processing device 20 classifies a subject, using the right image 112 and the disparity image 130, and assigns a label to each of pixels of the subject to generate the labeled image 140.

At step S13, the confidence calculation unit 50 of the image processing device 20 calculates confidence in a disparity for each label, using the confidence table 51, thus generating the confidence image 150.

At step S14, the disparity correction unit 60 of the image processing device 20 corrects a disparity with confidence lower than the reference confidence.

At step S15, the recognition processing unit 70 of the image processing device 20 performs object detection, using the disparity image 130, the confidence image 150, the right image 112, and the left image 111. Thereafter, the image processing device 20 carries out, for example, a process of issuing an alarm or transmitting a signal for activating the automatic emergency brake to a vehicle control device, as a process to carry out according to an object detection result, and ends a series of processes of the flowchart.

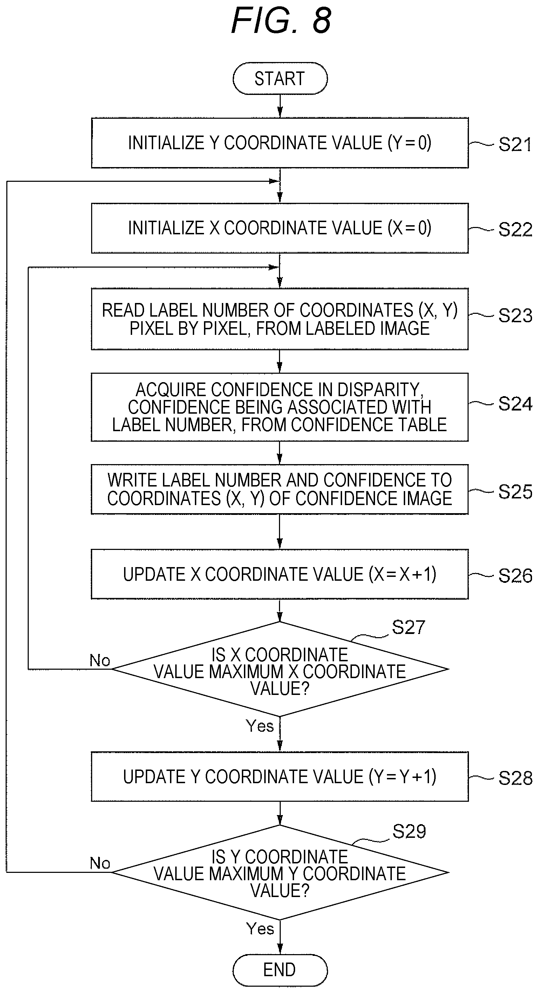

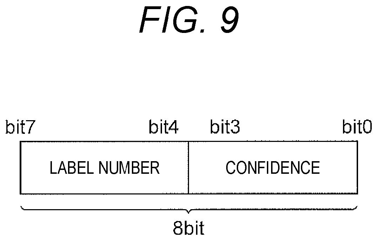

FIG. 8 is a flowchart showing processes carried out by the confidence calculation unit 50. FIG. 9 depicts an example of a configuration of data written to one pixel of the confidence image 150.

At step S21, the confidence calculation unit 50 initializes a Y coordinate value of coordinates (X, Y) for accessing (reading/writing from/to) the labeled image 140 and the confidence image 150 (Y=0). The coordinates (X, Y) indicate the position of each pixel of the labeled image 140 and the confidence image 150. The Y coordinate value is a coordinate value in the vertical direction of the labeled image 140 and the same of the confidence image 150.

At step S22, the confidence calculation unit 50 initializes an X coordinate value of the coordinates (X, Y) (X=0). The X coordinate value is a coordinate value in the horizontal direction of the labeled image 140 and the same of the confidence image 150.

At step S23, the confidence calculation unit 50 reads a label number of the coordinates (X, Y) pixel by pixel, from the labeled image 140.

At step S24, the confidence calculation unit 50 acquires confidence in a disparity, the confidence being associated with the label number, from the confidence table 51.

At step S25, the confidence calculation unit 50 writes the label number and the confidence to the coordinates (X, Y) of the confidence image 150. Data written to the coordinates (X, Y) at this step, for example, has a configuration shown in FIG. 9. In the example of FIG. 9, the data written is 8-bit data making up one pixel, in which bit0 to bit3 give confidence data and bit4 to bit7 give label number data.

At step S26, the confidence calculation unit 50 updates the X coordinate value (X=X+1).

At step S27, the confidence calculation unit 50 determines whether the X coordinate value has reached its maximum. The maximum of the X coordinate value indicates the coordinate value of a lateral end of the labeled image 140 and the same of the confidence image 150. When the X coordinate value has reached its maximum, the confidence calculation unit 50 proceeds to step S28. When the X coordinate value has not reached its maximum, the confidence calculation unit 50 proceeds to step S23.

At step S28, the confidence calculation unit 50 updates the Y coordinate value (Y=Y+1).

At step S29, the confidence calculation unit 50 determines whether the Y coordinate value has reached its maximum. The maximum of the Y coordinate value indicates the coordinate value of a vertical end of the labeled image 140 and the same of the confidence image 150. When the Y coordinate value has reached its maximum, the confidence calculation unit 50 ends a series of processes of the flowchart. When the Y coordinate value has not reached its maximum, the confidence calculation unit 50 proceeds to step S22.

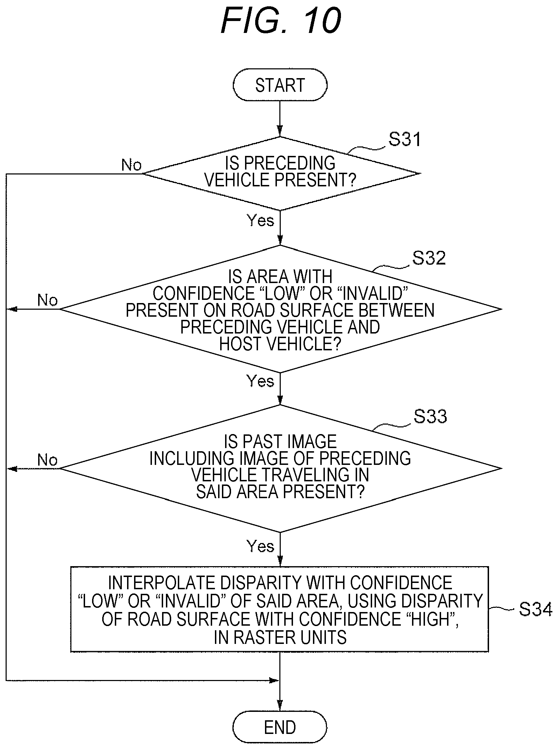

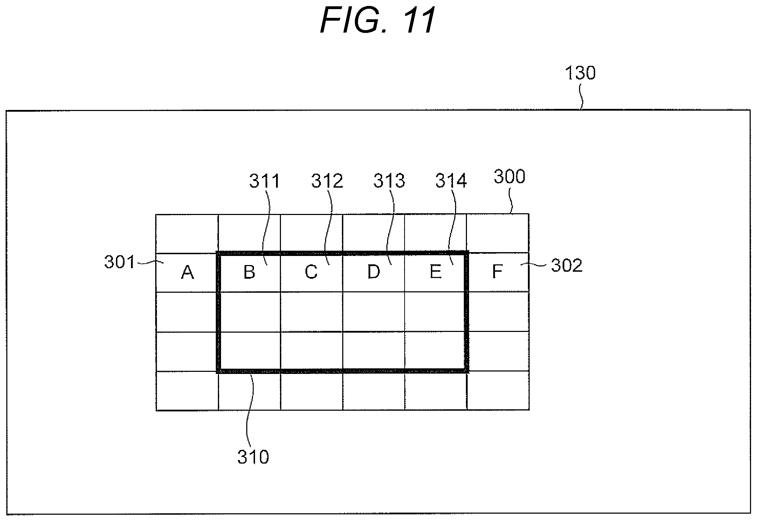

FIG. 10 is a flowchart showing processes carried out by the interpolation unit 61. FIG. 11 is a diagram for explaining step S34 shown in FIG. 10. In FIGS. 10 and 11, a case where the road surface between a preceding vehicle and a host vehicle is subjected to processing by the interpolation unit 61 is described as an example.

At step S31, the interpolation unit 61 determines whether the preceding vehicle is present in the confidence image 150. When the preceding vehicle is present, the interpolation unit 61 proceeds to step S32. When the preceding vehicle is not present, the interpolation unit 61 ends a series of processes of the flowchart.

At step S32, the interpolation unit 61 determines whether an area with confidence "low" or "invalid" is present on the road surface between the preceding vehicle and the host vehicle. When the area with confidence "low" or "invalid" is present, the interpolation unit 61 proceeds to step S33. When the area with confidence "low" or "invalid" is not present, the interpolation unit 61 ends a series of processes of the flowchart.

At step S33, the interpolation unit 61 determines whether a past image (the labeled image 140 or the confidence image 150) including an image of the preceding vehicle traveling in the area with confidence "low" or "invalid" is present. When the past image including the image of the preceding vehicle is present, the interpolation unit 61 proceeds to step S34. When the past image including the image of the preceding vehicle is not present, the interpolation unit 61 ends a series of processes of the flowchart.

At step S34, the interpolation unit 61 interpolates a disparity with confidence "low" or "invalid", using a disparity of the road surface with confidence "high", in raster units. Following step S34, the interpolation unit 61 ends the series of processes of the flowchart.

For example, as shown in FIG. 11, a case is assumed where an area 310 (e.g., a puddle) with confidence "low" or "invalid" is present on the road surface between the preceding vehicle and the host vehicle. In this case, the interpolation unit 61 makes interpolation, using a disparity of a road surface 300 adjacent to the area 310, the disparity having confidence "high". Specifically, the interpolation unit 61 interpolates disparities B to E of pixels 311 to 314 making up the area 310, using a disparity A of a pixel 301 of the road surface 300, the pixel 301 being laterally adjacent to the pixel 311, and a disparity F of a pixel 302 of the road surface 300, the pixel 302 being laterally adjacent to the pixel 314.

The interpolation unit 61 first makes a calculation expressed by equation (1). Interpolation value = (disparity F - disparity A)/(X coordinate value of pixel 302 - X coordinate value of pixel 301)

The interpolation unit 61 then makes a calculation expressed by equation (2). Disparity B = disparity A + interpolation value × (X coordinate value of pixel 311 - X coordinate value of pixel 301)

Disparities C to E are each determined by making a calculation in the same manner as the calculation by equation (2). By making the above calculations in raster units, the interpolation unit 61 can interpolate the disparity with confidence "low" or "invalid", using the disparity of the road surface with confidence "high".

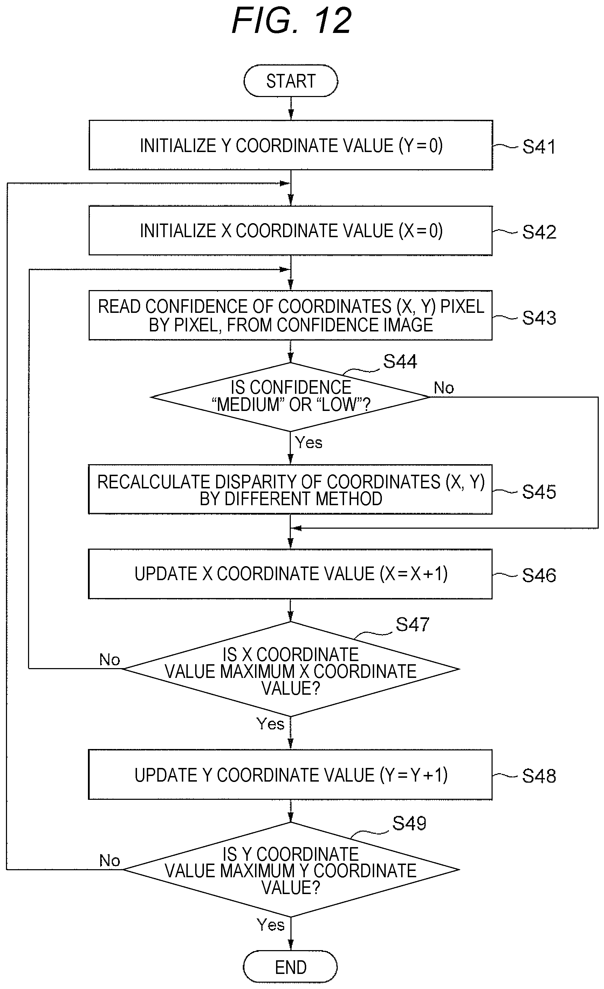

FIG. 12 is a flowchart showing processes carried out by the recalculation unit 62.

At step S41, the recalculation unit 62 initializes a Y coordinate value of coordinates (X, Y) for accessing (reading/writing from/to) the confidence image 150 and the disparity image 130 (Y=0). The coordinates (X, Y) indicate the position of each pixel of the confidence image 150 and the disparity image 130. The Y coordinate value is a coordinate value in the vertical direction of the confidence image 150 and the disparity image 130.

At step S42, the recalculation unit 62 initializes an X coordinate value of the coordinates (X, Y) (X=0). The X coordinate value is a coordinate value in the horizontal direction of the confidence image 150 and the disparity image 130.

At step S43, the recalculation unit 62 reads confidence of the coordinates (X, Y) pixel by pixel, from the confidence image 150.

At step S44, the recalculation unit 62 determines whether the confidence is "medium" or "low". When the confidence is "medium" or "low", the recalculation unit 62 proceeds to step S45. When the confidence is not "medium" or "low", the recalculation unit 62 proceeds to step S46.

At step S44, the case of the confidence being not "medium" or "low" includes a case of the confidence being "high" and a case of the confidence being "invalid". In the case of the confidence being "high", disparity correction is unnecessary and therefore the recalculation unit 62 proceeds to step S46. In the case of the confidence being "invalid", recalculation offers a low possibility of calculation of a disparity with confidence "high". For this reason, to suspend disparity correction, the recalculation unit 62 proceeds to step S46. There is a sufficiently high possibility that for a pixel having a disparity with confidence calculated at "invalid", a disparity with confidence "high" may be calculated in the images 111 and 112 that will be taken at the next time of photographing. Suspension of disparity correction by the recalculation unit 62, therefore, poses no problem.

At step S45, the recalculation unit 62 recalculates a disparity of the coordinates (X, Y) by a method different from a method adopted by the disparity calculation unit 30. When the disparity calculation unit 30 calculates a disparity, using the neural network model, the recalculation unit 62 recalculates a disparity by, for example, stereo matching.

At step S46, the recalculation unit 62 updates the X coordinate value (X=X+1).

At step S47, the recalculation unit 62 determines whether the X coordinate value has reached its maximum. The maximum of the X coordinate value indicates the coordinate value of a lateral end of the confidence image 150 and the same of the disparity image 130. When the X coordinate value has reached its maximum, the recalculation unit 62 proceeds to step S48. When the X coordinate value has not reached its maximum, the recalculation unit 62 proceeds to step S43.

At step S48, the recalculation unit 62 updates the Y coordinate value (Y=Y+1).

At step S49, the recalculation unit 62 determines whether the Y coordinate value has reached its maximum. The maximum of the Y coordinate value indicates the coordinate value of a vertical end of the confidence image 150 and the same of the disparity image 130. When the Y coordinate value has reached its maximum, the recalculation unit 62 ends a series of processes of the flowchart. When the Y coordinate value has not reached its maximum, the recalculation unit 62 proceeds to step S42.

As described above, the image processing device 20 of this embodiment includes: the disparity calculation unit 30 that calculates a disparity between the images 111 and 112 taken by the plurality of cameras 11 and 12; the labeling unit 40 that classifies a subject appearing in the images 111 and 112 and that assigns a label to each of pixels of the classified subject, the label corresponding to a type of the classified subject; the confidence calculation unit 50 that calculates confidence in the disparity for each assigned label; and the disparity correction unit 60 that corrects the disparity according to the calculated confidence.

As a result, the image processing device 20 of this embodiment can calculate confidence in a disparity, which changes depending on a status of the images 111 and 112 taken, pixel by pixel, and clarify an inaccurate disparity pixel by pixel. Thus, the image processing device 20 of this embodiment can correct the disparity according to the status of the images 111 and 112 taken, and therefore can calculate an accurate disparity. Hence, according to this embodiment, the image processing device capable of calculating an accurate disparity can be provided.

In addition, in the image processing device 20 of this embodiment, the disparity correction unit 60 includes the recalculation unit 62 that recalculates a disparity with confidence lower than the reference confidence, by a method different from a method adopted by disparity calculation unit 30.

The image processing device 20 of this embodiment is thus able to calculate a disparity by a plurality of calculation methods. Therefore, even if a disparity develops an error due to the characteristics of one calculation method, the disparity can be corrected by the other calculation method. Hence the image processing device 20 of this embodiment can calculate a more accurate disparity.

Furthermore, in the image processing device 20 of this embodiment, the disparity calculation unit 30 calculates a disparity, using the neural network model in which the images 111 and 112 are set in the input layer and a disparity is set in the output layer, and the recalculation unit 62 recalculates a disparity by stereo matching.

As a result, even if a disparity develops an error due to the characteristics of the calculation method using the neural network model, the image processing device 20 of this embodiment can correct the disparity by stereo matching. Hence the image processing device 20 of this embodiment can calculate a more accurate disparity.

Furthermore, in the image processing device 20 of this embodiment, the disparity correction unit 60 includes the interpolation unit 61 that interpolates a disparity with confidence lower than the reference confidence, based on a disparity calculated for the images 111 and 112 taken in the past.

As a result, even if a status of the images 111 and 112 taken at the present is not suitable for disparity calculation, the image processing device 20 of this embodiment can determine the validity of disparity interpolation, based on a disparity of the images 111 and 112 taken in the past, and interpolate a disparity according to the determination result. Hence the image processing device 20 of this embodiment can calculate a more accurate disparity.

Furthermore, in the image processing device 20 of this embodiment, the labeling unit 40 verifies the consistency between a type of a subject classified and a label assigned to the subject, based on a disparity.

This allows the image processing device 20 of this embodiment to assign a label more accurately, thus allowing accurate calculation of confidence. Hence the image processing device 20 of this embodiment can calculate a more accurate disparity.

Furthermore, in the image processing device 20 of this embodiment, the confidence calculation unit 50 calculates confidence, using the confidence table 51 showing the correspondence relationship between labels and confidence.

This allows the image processing device 20 of this embodiment to reduce the volume of calculations for calculating the confidence, thus allowing the image processing device 20 to easily calculate the confidence even with a simple configuration. Hence the image processing device 20 of this embodiment can calculate an accurate disparity easily.

The image processing device 20 of this embodiment further includes the recognition processing unit 70 that detects an object around the vehicle equipped with the plurality of cameras 11 and 12, based on a disparity corrected, confidence, and the images 111 and 112, and the recognition processing unit 70 changes the size of the subject recognized as a detection target or the distance to the subject, according to confidence.

This allows the image processing device 20 of this embodiment to exclude a subject having a disparity with confidence lower than the reference confidence, from the detection targets. Therefore, the image processing device 20 of this embodiment can calculate an accurate disparity and can prevent wrong detection of an object as well.

Furthermore, in the image processing device 20 of this embodiment, a disparity, confidence, and label information association with each other pixel by pixel are inputted to the recognition processing unit 70.

This allows the image processing device 20 of this embodiment to review confidence and a label that are acquired in a previous stage to object detection, thus allowing an improvement in the accuracy of object detection. Therefore, the image processing device 20 of this embodiment can calculate an accurate disparity and can improve the accuracy of object detection as well.

It should be noted that the present invention is not limited to the above embodiment and that the invention includes various modifications. For example, the above embodiment has been described in detail for easy understanding of the present invention, and is not necessarily limited to an embodiment including all constituent elements described above. Some constituent elements of a certain embodiment may be replaced with constituent elements of another embodiment, and a constituent element of another embodiment may be added to a constituent element of a certain embodiment. In addition, another constituent element may be added to, deleted from, or replaced with some of constituent elements of each embodiment.

Some or all of the above constituent elements, functions, processing units, processing means, and the like may be provided as hardware, such as properly designed integrated circuits. In addition, the above-described constituent elements, functions, and the like may be provided in the form of software-based programs by causing a processor to interpret and execute programs for implementing the constituent elements/functions. Information for implementing functions, such as programs, tables, and files, may be stored in a storage device, such as a memory, a hard disk, and a solid state drive (SSD), or in a recording medium, such as an IC card, an SD card, and a DVD.

A group of control lines/information lines considered to be necessary for description are illustrated, and all control lines/information lines making up the product are not necessarily illustrated. It is safe to assume that, actually, almost the entire constituent elements are interconnected.

### Reference Signs List

- 11, 12: camera
- 20: image processing device
- 30: disparity calculation unit
- 40: labeling unit
- 50: confidence calculation unit
- 51: confidence table
- 60: disparity correction unit
- 61: interpolation unit
- 62: recalculation unit
- 70: recognition processing unit

## Claims

1. An image processing device comprising:
a disparity calculation unit that calculates a disparity between images taken by a plurality of cameras;
a labeling unit that classifies a subject appearing in the images and that assigns a label to each of pixels of the subject classified, the label corresponding to a type of the subject classified;
a confidence calculation unit that calculates confidence in the disparity for each label assigned; and
a disparity correction unit that corrects the disparity according to the confidence calculated.

2. The image processing device according to claim 1, wherein the disparity correction unit includes a recalculation unit that recalculates the disparity with the confidence lower than a reference confidence, by a method different from a method adopted by the disparity calculation unit.

3. The image processing device according to claim 2, wherein
the disparity calculation unit calculates the disparity, using a neural network model in which the images are set in an input layer and the disparity is set in an output layer, and
the recalculation unit recalculates the disparity by stereo matching.

4. The image processing device according to claim 1, wherein the disparity correction unit includes an interpolation unit that interpolates the disparity with the confidence lower than a reference confidence, based on the disparity calculated for the images taken in the past.

5. The image processing device according to claim 1, wherein the labeling unit verifies consistency between a type of the subject classified and the label assigned to the subject, based on the disparity.

6. The image processing device according to claim 1, wherein the confidence calculation unit calculates the confidence, using a confidence table showing a correspondence relationship between the label and the confidence.

7. The image processing device according to claim 1, further comprising a recognition processing unit that detects an object around a vehicle equipped with the plurality of cameras, based on the disparity corrected, the confidence, and the images,
wherein the recognition processing unit changes a size of the subject recognized as a detection target or a distance to the subject, according to the confidence.

8. The image processing device according to claim 7, wherein the disparity, the confidence, and information on the label that are in association with each other pixel by pixel are inputted to the recognition processing unit.
